# EUROPÄISCHE PATENTSCHRIFT

(11) **EP 3 662 185 B1**
(45) Veröffentlichungstag und Bekanntmachung des Hinweises auf die Patenterteilung: **10.09.2025**
(21) Anmeldenummer: 18726760.4
(22) Anmeldetag: 16.05.2018
(51) Int. Cl.: F16K 41/02, F16K 5/02, F16K 5/04, F16K 41/00

(54) **ABSPERRVORRICHTUNG MIT EINER DICHTUNGSVORRICHTUNG**
SHUT-OFF DEVICE COMPRISING A SEALING DEVICE
DISPOSITIF D'OBTURATION COMPRENANT UN DISPOSITIF D'ÉTANCHÉITÉ

(30) Priorität: 31.07.2017 DE 102017117330; 05.09.2017 DE 102017120389
(43) Veröffentlichungstag der Anmeldung: 10.06.2020
(73) Patentinhaber: Xomox International GmbH&Co. OHG, 88131 Lindau (DE)
(72) Erfinder: FUOC, Alain, 68110 Illzach (FR)
(74) Vertreter: Wesch, Arno
(86) Internationale Anmeldenummer: PCT/EP2018/062769
(87) Internationale Veröffentlichungsnummer: WO 2019/025045

(56) Entgegenhaltungen:
- DE-A1- 3 345 116
- US-A- 3 371 676
- US-A- 4 159 818
- US-A- 5 064 167
- US-A1- 2001 032 952
- US-A1- 2002 046 768
- US-A1- 2013 270 472
- US-A1- 2014 035 238

## Beschreibung

Die Erfindung betrifft ein Ventil nach dem Oberbegriff des Patentanspruchs 1.

Ein Ventil, bei dem eine Dichtungsvorrichtung in einem Ringraum aufgenommen ist, zeigt die US 2013/0270472 A1. Eine Dichtungsanordnung, die fluidische Druckunterschiede eliminiert und mittels eines Sicherungsstifts und einer Dichtung in einem Gehäuse fixiert ist, zeigt die US 2014/0035238 A1. Aus der US 2001/0032952 A1 ist ein Ventil mit einer Dichtungsvorrichtung mit einer Kugel und einer Pfanne bekannt. Die DE 33 45 116 A1 zeigt ein Ventil, bei dem Befestigungsschrauben das Schwimmen einer Dichtungsbuchse zulassen.

Ein Kükenventil mit einem konisch verlaufenden Küken ist bereits aus der DE 20 2004 019 228 U1 bekannt. Dort ist ein Kükenventil offenbart, dessen Küken in einem Gehäuse aufgenommen ist. Das Küken ist ein im Gehäuse um seine Achse drehbar angeordnetes Element mit einer Durchgangsöffnung für ein Fluid. Ein solches Element wird nachfolgend als konischer Drehkörper bezeichnet.

Entsprechend der Drehwinkelstellung des konischen Drehkörpers um seine Drehachse ist ein Strömungsweg ganz abgesperrt oder zumindest teilweise freigegeben. Der konische Drehkörper trägt eine Spindel, durch welche der konische Drehkörper betätigbar oder drehbar ist. Das Ventil ist mit einer Abdeckung versehen. Die Spindel ist gegen die Abdeckung durch eine Stopfbuchsdichtung abgedichtet.

Vor diesem Hintergrund sind Ventile bekannt, bei denen eine Dichtungsvorrichtung in einer Abdeckung angeordnet ist, wobei sich die Dichtungsvorrichtung in Kontakt mit der Oberfläche des konischen Drehkörpers befindet.

Wenn eine Abdeckung fest mit dem statischen Gehäuse eines Ventils mit einem konischen Drehkörper verbunden ist, kann diese seitlichen Verschiebungen einer Spindel nicht folgen. Hierdurch werden unkontrollierte entweichende Emissionen provoziert.

Dies ist insbesondere dann der Fall, wenn unbeabsichtigte seitliche Bewegungen, die längs der Spindel auftreten, in ungünstiger Weise initiiert werden.

Solche Bewegungen machen sich in dem Teil der Oberfläche der Dichtungsvorrichtung bemerkbar, der während eines vorübergehenden Zustands entlastet ist.

Durch unerwünschte seitliche Bewegungen der Spindel kann nämlich eine Dichtungsvorrichtung in einer Richtung belastet und in einer anderen entlastet werden. Zumindest auf der entlasteten Seite kann es zu Leckagen kommen.

Hierdurch können sich gefährliche Medien, insbesondere Flüssigkeiten, aber auch Gase oder Feststoffe, in der Umgebung ausbreiten. Die Medien können auch zu irreparablen Veränderungen an Oberflächen führen, die mit den Medien beaufschlagt werden. Außerdem können Gefahren für Menschen und Tiere oder die Umwelt bestehen, wenn Medien in unerwünschter Weise austreten.

Der Erfindung liegt daher die Aufgabe zu Grunde, ein Ventil anzugeben, das auch bei unerwünschten Kraftbeaufschlagungen dauerhaft eine hohe Betriebstauglichkeit zeigt.

Die vorliegende Erfindung löst die zuvor genannte Aufgabe durch die Merkmale des Patentanspruchs 1.

Danach ist die Spindel durch eine Dichtungsvorrichtung dynamisch abgedichtet, welche Bewegungen der Spindel relativ zum Gehäuse und zur Abdeckung zumindest bereichsweise oder abschnittsweise folgt.

Die Dichtungsvorrichtung kann unabhängig bzw. entkoppelt von eventuellen Bewegungen der Spindel relativ zur Abdeckung dichten.

Die Dichtungsvorrichtung folgt der Spindel, ohne ihre dichtende Anlage an der Umfangsfläche der Spindel zu verlieren. Die Dichtungsvorrichtung folgt bereichsweise oder abschnittsweise insbesondere Kippbewegungen, jedoch keinen Drehbewegungen der Spindel.

Erfindungsgemäß bewegt sich die Dichtungsvorrichtung zumindest teilweise möglichst strikt mit der Spindel bzw. mit dem Drehkörper des Ventils. Dies erfolgt erfindungsgemäß möglichst ohne irgendeine Beeinträchtigung durch fixierte Komponenten.

Erfindungsgemäß ist zunächst erkannt worden, dass es zwingend erforderlich ist, dass eine Dichtungsvorrichtung einer Spindel möglichst keinerlei Druckbelastungen und/ oder seitlichen Druckentlastungen ausgesetzt wird, damit diese auf Dauer ihre Funktion erfüllen kann.

Erfindungsgemäß ist auch erkannt worden, dass Dichtungskomponenten einem dauernden und ununterbrochenen Dichtungsdruck ausgesetzt sein sollten, ohne dass dieser durch Kräfte beeinflusst ist, die von der Dichtungsvorrichtung nach innen auf die Spindel oder andere Flächen des Drehkörpers ausgeübt werden.

Diese in erfinderischer Weise erkannten Rahmenbedingungen werden erfindungsgemäß durch eine geeignete Kinematik der zusammengefügten Bauteile der Dichtungsvorrichtung erfüllt.

Konkret werden in einer erfindungsgemäßen Dichtungsvorrichtung definierte Dichtungskomponenten durch ein Federspiel einer homogenen Belastung ausgesetzt, wobei das Federspiel unabhängig von der Position des Drehkörpers lokal wirkt.

Erfindungsgemäß ist so eine einfache, kompakte und leicht herzustellende Dichtungsvorrichtung geschaffen, welche effizient von der Spindel geführt wird.

Die Position der Dichtungsvorrichtung ist im Wesentlichen nur von Kontaktoberflächen mit der Spindel abhängig. Die Abdichtung der Spindel ist auf diese Weise vor allen seitlichen Belastungen geschützt, die von seitlichen Verschiebungen des Drehkörpers mit geringer Amplitude hervorgerufen werden.

Die Abdichtung der Spindel ist insbesondere geschützt, wenn diese einem asymmetrischen Schub ausgesetzt ist, der von einem Fluid oder Medium im Inneren des Gehäuses herrührt. Ein solcher Schub kann während der normalen Nutzung des Ventils hervorgerufen werden.

Der Schutz ist gegeben, weil die Dichtungsvorrichtung beweglich im Wesentlichen nur mit der Spindel in Kontakt steht.

Das Ventil ist im Hinblick auf seine Dichtheit erfindungsgemäß auch gegen die Folgen einer Fehlausrichtung eines Bedienelements geschützt. Das Ventil ist erfindungsgemäß auch gegen Wirkungen geschützt, die durch Nutzung eines asymmetrischen Hebels oder durch abwechselnde Belastungen hervorgerufen werden. Solche Belastungen können durch ein Erdbeben erzeugt werden oder durch Vibrationen, die von einem Fahrzeug verursacht werden, welches das Ventil trägt. Ein solches Fahrzeug kann beispielsweise ein Tankwagen sein, der entweder auf der Straße oder auf Schienen bewegt wird.

Die Dichtungsvorrichtung könnte einen fixierten Dichtungsabschnitt und einen dynamischen Dichtungsabschnitt aufweisen, wobei der dynamische Dichtungsabschnitt die Umfangsfläche der Spindel dichtend umfängt und relativ zum fixierten Dichtungsabschnitt beweglich ist. Die relative Beweglichkeit beschränkt sich insbesondere auf Mikrobewegungen der Spindel und des Drehkörpers. Der fixierte Dichtungsabschnitt, der bevorzugt im Wesentlichen durch Membrane gebildet wird, fungiert als eine Art Balg. Der dynamische Dichtungsabschnitt ist bevorzugt zylindrisch und/ oder manschettenartig ausgebildet. Der dynamische Dichtungsabschnitt führt der Bewegung der Spindel folgend keine rotatorische Bewegung aus.

Die Dichtungsvorrichtung weist einen ersten Antiextrusionsring und/ oder Führungsring und einen von diesem axial beabstandeten zweiten Antiextrusionsring und/ oder Führungsring auf, wobei die beiden Antiextrusionsringe bzw. Führungsringe die äußere Umfangsfläche der Spindel innerhalb der Abdeckung umfangen. Die Dichtungsvorrichtung wird ausschließlich durch die Spindel geführt, die auf die Antiextrusionsringe ohne Betriebsspiel einwirkt.

Zwischen den Antiextrusionsringen bzw. Führungsringen könnten mehrere im Querschnitt V-förmige, rechteckförmige und/ oder im Querschnitt anders gestaltete Ringe oder Schnüre angeordnet sein. Durch die Antiextrusionsringe ist ein Extrusionsschutz für die im Querschnitt V-förmigen oder anders gestalteten Ringe oder Schnüre gegeben. Diese Ringe oder Schnüre sind zwischen den Antiextrusionsringen gestapelt und/ oder gekapselt angeordnet. Die im Querschnitt V-förmigen oder anders gestalteten Ringe oder Schnüre können aus Kunststoff oder Graphit gefertigt sein, bevorzugt sind diese aus Polytetrafluorethylen (PTFE) oder Graphit gefertigt.

Zumindest auf einen Stopfbuchsring könnte eine Federeinrichtung einwirken und/ oder an einem Stopfbuchsring könnte eine Federeinrichtung federnd anliegen, wobei sich die Federeinrichtung mittelbar oder unmittelbar gegen die Abdeckung und/ oder gegen einen Druckring abstützt. Hierdurch werden die im Querschnitt V-förmigen Ringe oder anders gestalteten Ringe oder Schnüre unter permanenter Spannung gehalten. Bevorzugt ist der Stopfbuchsring metallisch ausgebildet. Weiter bevorzugt weist die Federeinrichtung Federscheiben auf.

Die Dichtungsvorrichtung weist einen ersten Druckring und einen zweiten Druckring auf, wobei axial zwischen den Druckringen mehrere Dichtungskomponenten aufgenommen sind. Die Dichtungskomponenten stehen bevorzugt unter Federspannung einer Federeinrichtung. Eine auf einen Druckring wirkende Kraft kann in geeigneter Weise umgeleitet werden.

Die Dichtungsvorrichtung könnte zur statischen Abdichtung mindestens eine Membran umfassen, welche zwischen der Abdeckung und dem Gehäuse angeordnet ist. Hierdurch wird das Äußere bzw. die Umgebung vor austretenden Medien geschützt. Des Weiteren wird eine Dichtheit des Ventils unabhängig von der Dichtheit des Drehkörpers realisiert. Es ist auch denkbar, mehrere miteinander verbundene, insbesondere metallische, Membranen zu verwenden.

Die Membran könnte mit einem ersten Druckring verbunden sein. Hierdurch wird die Montage vereinfacht, da die Membran verliersicher mit dem Druckring verbunden ist. Die Membran ist bevorzugt metallisch ausgebildet und mit dem Druckring verschweißt. Es ist auch eine andere vollständig dichtende Verbindung möglich. Es kann auch ein Membranbündel mit dem Druckring in einer vollständig dichtenden Weise verbunden oder verschweißt sein. Es ist auch denkbar, dass die Membran mit dem Gehäuse oder der Abdeckung verschweißt oder verbunden ist.

Neben der ersten Membran könnte eine weitere Membran aus einem Polymer oder Polytetrafluorethylen vorgesehen sein, welche an der ersten Membran anliegt und zwischen der Abdeckung und dem Gehäuse angeordnet ist. Hierdurch wird die Abdichtung verbessert.

Neben der ersten Membran könnte eine Körperdichtung vorgesehen sein, welche an der ersten Membran anliegt und zwischen der Abdeckung und dem Gehäuse angeordnet ist. Hierdurch wird die Abdichtung weiter verbessert, nämlich nahezu verdoppelt, da die Körperdichtung die Dichtheit von innen nach außen und umgekehrt bewirkt. Die Körperdichtung ist bevorzugt formschlüssig und/ oder kraftschlüssig im Gehäuse aufgenommen. Die Dichtheit gegen die Atmosphäre ist auch durch die Körperdichtung gewährleistet, über welcher bevorzugt eine Membran aus Metall liegt.

Die Dichtungsvorrichtung könnte Sicherheitsmittel zur Abdichtung des Ventils aufweisen. Die Sicherheitsmittel stellen sicher, dass ein qualifizierter Bediener das Ventil im Fall eines möglichen Versagens einer ersten Sperre abdichten kann, ohne die beschriebene Kinematik zu beeinträchtigen.

Das hier beschriebene Ventil kann als Kükenventil, Kugelventil oder als ein anderes Ventil ausgestaltet sein, bei welchem die hier beschriebene Dichtungsvorrichtung als schwimmende Dichtungsvorrichtung sinnvoll einsetzbar ist.

Unter Ventil wird insoweit jede Absperrvorrichtung verstanden, die mit einer schwimmenden Dichtungsvorrichtung der hier beschriebenen Art ausgerüstet werden kann. Solche Ventile können beispielsweise als Kükenventile, Klappenventile oder Kugelhähne ausgestaltet sein.

In der Zeichnung zeigen
- Fig. 1: eine perspektivische Ansicht eines konischen Drehkörpers, welcher mit einer Spindel verbunden ist, wobei die Spindel von einer Dichtungsvorrichtung umgeben ist,
- Fig. 2: eine Schnittansicht des oberen Teils eines Ventils, welches ein Gehäuse aufweist, und eine Schnittansicht der Dichtungsvorrichtung gemäß Fig. 1, wobei ein Kraftfluss durch Pfeile dargestellt ist, welcher unabhängig von der Stellung des Drehkörpers, des Gehäuses und der Abdeckung ist,
- Fig. 3: eine Schnittansicht des oberen Teils eines Ventils, welches ein Gehäuse und eine Abdeckung aufweist, und eine Schnittansicht der Dichtungsvorrichtung gemäß Fig. 1,
- Fig. 4: die linke untere Seite der Dichtungsvorrichtung gemäß Fig. 2 und 3, wobei ein erster Antiextrusionsring dargestellt ist, auf welchem mehrere V-förmige Ringe aus PTFE angeordnet sind, welche eine Winkelmanschette bilden,
- Fig. 5: eine perspektivische Ansicht des ersten, unteren Druckrings mit einer metallischen Membran, welche mit dem Druckring undurchdringlich verbunden ist, und
- Fig. 6: eine Darstellung einer weiteren Dichtungsvorrichtung, wobei Sicherheitsmittel zur Abdichtung des Ventils dargestellt sind, wobei eine Schnittansicht des oberen Teils des Ventils dargestellt ist, welches ein Gehäuse und eine Abdeckung aufweist und wobei eine Detailansicht der Schnittansicht der Dichtungsvorrichtung gezeigt ist.

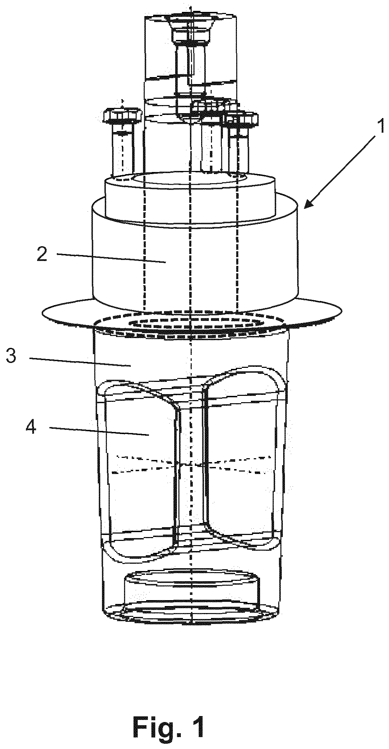

Fig. 1 zeigt eine schwimmende Dichtungsvorrichtung 1 für eine Spindel 2, die es ermöglicht, die Dichtheit gegenüber der Atmosphäre signifikant zu verbessern.

Die Dichtungsvorrichtung 1 wird ausschließlich durch die Spindel 2 geführt. Hierdurch soll ein möglichst hohes Dichtheitsniveau erreicht werden, um den anspruchsvollen Normen im Hinblick auf unkontrollierte Emissionen gerecht zu werden, ohne in einem Referenzzeitraum in die Dichtungsvorrichtung 1 einzugreifen.

Unter einem Referenzzeitraum wird ein Zeitraum verstanden, während dessen kein Zugriff auf die Dichtungsvorrichtung 1 erfolgt. Während eines solchen Zeitraums wird nutzerseitig erwartet, dass keine Wartung notwendig ist.

Die Spindel 2 ist einstückig mit einem Drehkörper 3 ausgebildet, in dem eine Durchgangsöffnung 4 für ein Fluid ausgebildet ist.

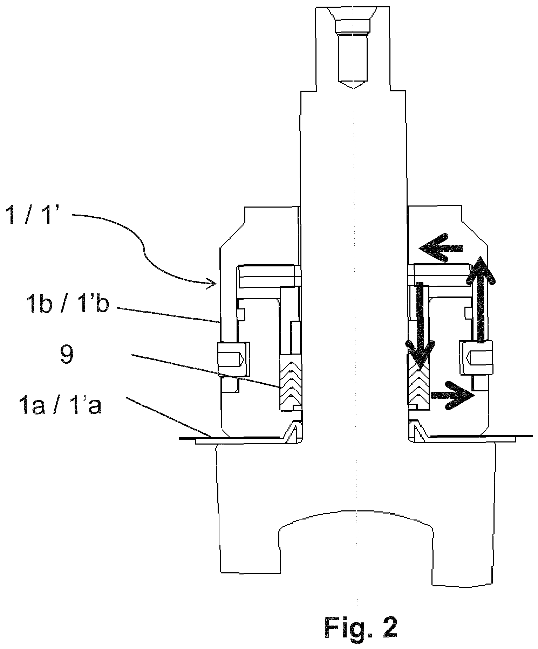

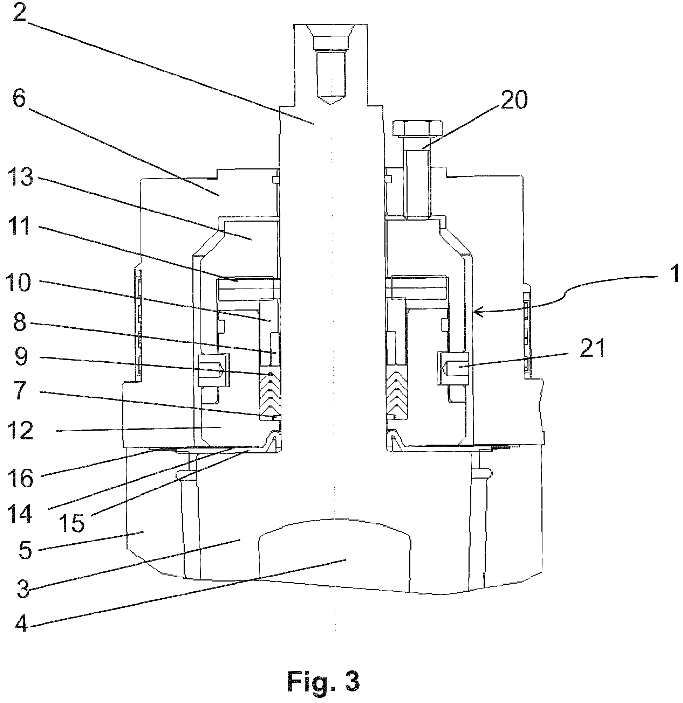

Fig. 2 und 3 zeigen in einer teilweisen Schnittansicht ein Ventil, umfassend ein Gehäuse 5 und einen in diesem drehbar angeordneten Drehkörper 3 mit einer Durchgangsöffnung 4 für ein Fluid. Entsprechend der Drehwinkelstellung des Drehkörpers 3 um eine nicht dargestellte Drehachse ist ein Strömungsweg abgesperrt oder zumindest teilweise freigegeben. Der Drehkörper 3 ist mit einer Spindel 2 verbunden, durch welche der Drehkörper 3 drehbar ist. Das Gehäuse 5 ist mit einer Abdeckung 6 versehen. Die Spindel 2 durchgreift die Abdeckung 6.

Die Spindel 2 ist einstückig und materialeinheitlich mit dem Drehkörper 3 ausgebildet. Es ist jedoch auch denkbar, dass die Spindel 2 und der Drehkörper 3 nicht einstückig und/ oder nicht materialeinheitlich ausgebildet sind. Eine strukturelle Trennung von Spindel 2 und Drehkörper 3 ist denkbar. Der Drehkörper 3 ist konisch ausgebildet, nämlich als konisches Küken ausgebildet.

Die Spindel 2 ist durch eine Dichtungsvorrichtung 1 dynamisch abgedichtet, welche Bewegungen der Spindel 2 relativ zum Gehäuse 5 und zur Abdeckung 6 folgt.

Fig. 2 zeigt, dass die Dichtungsvorrichtung 1, 1' einen fixierten Dichtungsabschnitt 1a, 1'a und einen dynamischen Dichtungsabschnitt 1b, 1'b aufweist, wobei der dynamische Dichtungsabschnitt 1b, 1'b die Umfangsfläche der Spindel 2 dichtend umfängt und relativ zum fixierten Dichtungsabschnitt 1a, 1'a beweglich ist. Der fixierte Dichtungsabschnitt 1a, 1'a wird durch nachfolgend beschriebene Membrane gebildet.

Die Dichtungsvorrichtung 1 weist einen ersten Antiextrusionsring 7, der eher weniger als Führungsring fungiert, und einen von diesem axial beabstandeten zweiten Antiextrusionsring 8 auf, der eher mehr als Führungsring fungiert, wobei die beiden Antiextrusionsringe 7, 8 die äußere Umfangsfläche der Spindel 2 innerhalb der Abdeckung 6 umfangen. Die Spindel 2 wirkt auf die zwei Antiextrusionsringe 7, 8 ein. Die Antiextrusionsringe 7, 8 haben eine Führungsfunktion. Die Spindel 2 zeigt kein Betriebspiel mit sich selbst.

Zwischen den Antiextrusionsringen 7, 8 sind mehrere im Querschnitt V-förmige Ringe 9 angeordnet. Hierdurch wird ein Extrusionsschutz der im Querschnitt V-förmigen Ringe 9 gegeben, die aufgrund der konstruktiven Anordnung der Spindel 2 und der Antiextrusionsringe 7, 8 gekapselt sind. Die im Querschnitt V-förmigen Ringe 9 sind aus Polytetrafluorethylen (PTFE) gefertigt, können jedoch auch aus Graphit gefertigt sein. Die im Querschnitt V-förmigen Ringe 9 sind in einem Ringraum gekapselt.

Der erste Antiextrusionsring 7 hat neben der Führungsfunktion vor allem die Funktion, eine Extrusion der Ringe 9 durch einen Spalt zu vermeiden. Der erste Antiextrusionsring 7 kann aber auch keine Führungsfunktion entfalten, sondern nur eine Antiextrusionsfunktion entfalten und nur als Antiextrusionsring ausgebildet sein.

Zumindest auf einen Stopfbuchsring 10 wirkt eine Federeinrichtung 11 ein. Die Federeinrichtung 11 liegt an dem Stopfbuchsring 10 federnd an, wobei sich die Federeinrichtung 11 gegen einen zweiten Druckring 13 abstützt. Auch eine mittelbare Abstützung ist denkbar. Die im Querschnitt V-förmigen Ringe 9 sind insoweit mit einer Ringführung verbunden. Die im Querschnitt V-förmigen Ringe 9 werden von mehreren Federscheiben der Federeinrichtung 11 unter permanenter Spannung gehalten, wobei die Federscheiben auf den metallischen Stopfbuchsring 10 einwirken.

Der Stopfbuchsring 10 kann zweiteilig ausgeführt sein. Dies ermöglicht es, Effekte zu reduzieren, die auf Ausdehnungsphänomene zurückzuführen sind. Solche Phänomene können bei gegebenenfalls auftretenden Temperaturzyklen aufgrund der Verwendung unterschiedlich temperierter Medien oder bei bestimmten Prozessen hervorgerufen werden. Bei manchen Prozessen können unterschiedliche Temperaturzyklen auftreten, wenn die in den Prozessen verwendeten Medien auf unterschiedliche Temperaturen verbracht werden.

Spannungen werden radial gelenkt. Die Kraft, die durch die Federeinrichtung 11 auf den zweiten Druckring 13 ausgeübt wird, wird durch die Konstruktion auf den ersten Druckring 12 umgelenkt. Hierdurch werden alle Effekte auf die anderen Komponenten aufgehoben, welche eine innere Dichtheit gewährleisten.

Fig. 2 zeigt insoweit eine vorwiegend schematische Ansicht, um den Kraftfluss darzustellen.

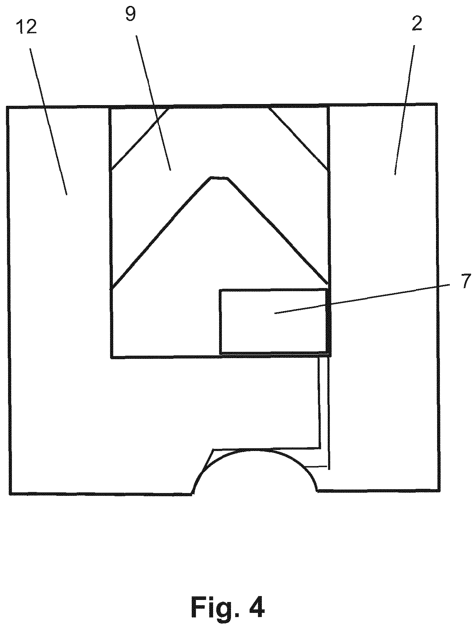

Fig. 2 und 3 zeigen konkret, dass die Dichtungsvorrichtung 1 einen ersten Druckring 12 und einen zweiten Druckring 13 aufweist, wobei axial zwischen den Druckringen 12 und 13 mehrere Dichtungskomponenten aufgenommen sind. Die Fig. 4 zeigt Detailansichten der Dichtungskomponenten.

Die Dichtungsvorrichtung 1 kann zur statischen Dichtung mindestens eine Membran 14 umfassen, welche zwischen der Abdeckung 6 und dem Gehäuse 5 angeordnet ist. Es können mehrere Membranen 14 zwischen der Abdeckung 6 und dem Gehäuse 5 metallisch verklemmt sein.

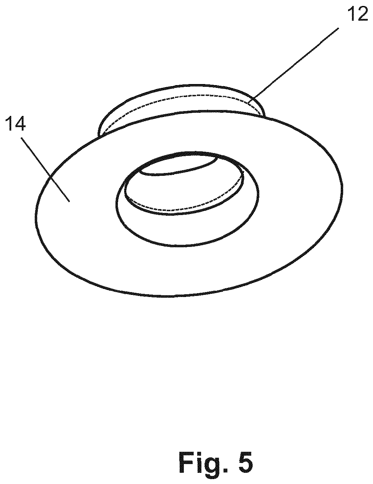

Fig. 5 zeigt konkret, dass die Membran 14 mit dem ersten Druckring 12 verbunden, nämlich mit diesem verschweißt ist. Andere undurchdringliche Verbindungen zwischen Membran 14 und erstem Druckring 12 sind jedoch mit Bezug zu Fig. 5 auch denkbar.

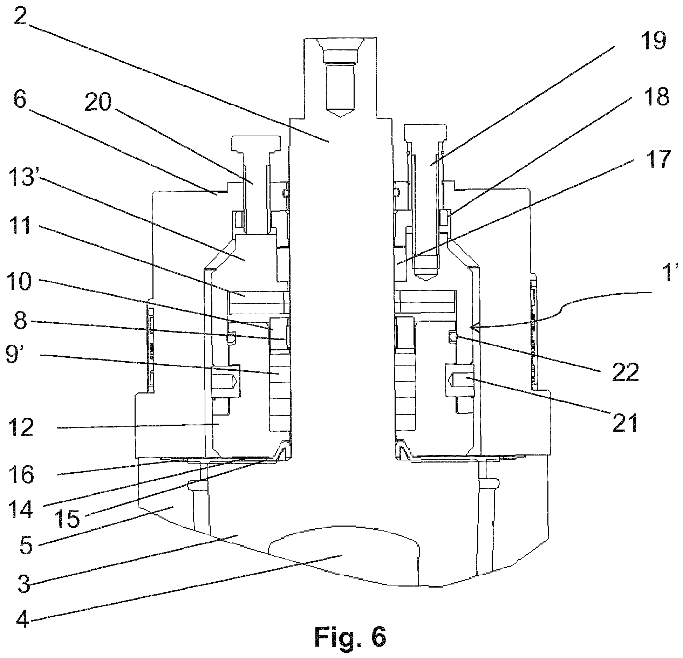

Fig. 3 und 6 zeigen, dass neben den ersten Membranen 14 eine weitere Membran 15 aus einem Polymer vorgesehen ist, welche an einer ersten Membran 14 anliegt und zwischen der Abdeckung 6 und dem Gehäuse 5 angeordnet ist. Die weitere Membran 15 liegt unmittelbar am Gehäuse 5 an.

Die weitere Membran 15 aus Polymer, insbesondere aus PTFE oder PTFE-Compounds, entfaltet eine Dichtwirkung, die durch eine Körperdichtung 16 verdoppelt wird, welche die Dichtheit in zwei Richtungen, nämlich von innen nach außen und umgekehrt, gewährleistet.

Die Körperdichtung 16 ist bevorzugt als Flachdichtung ausgebildet, welche in einer ersten, radial äußeren Zone zwischen Abdeckung 6 und Gehäuse 5 verpresst ist und in einer radial inneren, zweiten Zone zwischen der Membran 14 und dem Gehäuse 5 verpresst ist.

Die zuvor beschriebene Dichtungswirkung wird durch das Einsetzen des zweiten Druckrings 13 erhöht.

Fig. 6 zeigt, dass eine alternative Dichtungsvorrichtung 1' Sicherheitsmittel zur Abdichtung des Ventils aufweist.

Der zweite Druckring 13' verfügt hierzu über einen Verstärkungsdichtring 17 oder eine Packung, der bzw. die durch eine Stopfbuchse 18 verdichtet werden kann. Die Stopfbuchse 18 wird von einem Steuerelement 19 geschoben. Das Steuerelement 19 ist im Notfall für einen Bediener zugänglich. Diese Einrichtung ist unabhängig von der Abdeckung 6 und kann Anpassungsbewegungen der Spindel 2 und des Drehkörpers 3, insbesondere Abwärtsbewegungen, folgen.

Eine Innendichtung, insbesondere ein O-Ring 22, gewährleistet die Dichtheit zwischen dem zweiten Druckring 13' und dem ersten Druckring 12. Im Falle eines Versagens der Ringe 9' ist es notwendig, eine Kavität abzudichten, welche unterhalb des Verstärkungsdichtrings 17 bzw. der Packung liegt, welcher bzw. welche manuell betätigbar ist.

Obwohl in Fig. 6 alternative, im Querschnitt rechteckförmige Ringe 9' dargestellt sind, ist es in Analogie zu Fig. 2, auch denkbar, die in Fig. 3 gezeigten Ringe 9 nebst Antiextrusionsringen 7, 8 anzuordnen.

Fig. 3 und 6 zeigen weiter konkret einen Sicherungsstift 21, der sicher stellt, dass die zwischen den Druckringen 12, 13, 13' angeordneten Dichtungskomponenten zusammengedrückt bleiben.

Fig. 3 und 6 zeigen weiter, dass mindestens ein Nachstellelement 20 vorgesehen sein kann, um den Drehkörper 3 insbesondere axial zu verschieben. Es sind konkret drei schraubenartige Nachstellelemente 20 vorgesehen, um die innere Dichtheit des Ventils durch Abwärtsbewegungen der Spindel 2 und des Drehkörpers 3 herzustellen. Diese Anpassungsbewegungen oder Abwärtsbewegungen sind bevorzugt axial gerichtet.

### Bezugszeichenliste :

- 1, 1': Dichtungsvorrichtung
- 2: Spindel für den Drehkörper
- 3: Drehkörper
- 4: Durchgangsöffnung
- 5: Gehäuse
- 6: Abdeckung
- 7: Erster, unterer Antiextrusionsring oder Führungsring
- 8: Zweiter, oberer Antiextrusionsring oder Führungsring
- 9: Im Querschnitt V-förmiger Ring einer Winkelmanschette
- 9': Ringe
- 10: Stopfbuchsring
- 11: Federeinrichtung
- 12: Erster, unterer Druckring
- 13, 13': Zweiter, oberer Druckring
- 14: Metallische Membran
- 15: Weitere Membran aus PTFE
- 16: Körperdichtung
- 17: Verstärkungsdichtring oder Packung
- 18: Stopfbuchse
- 19: Steuerelement zur Dichtungsverstärkung
- 20: Nachstellelement
- 21: Sicherungsstift
- 22: Innendichtung oder O-Ring

## Patentansprüche

1. Ventil, umfassend ein Gehäuse (5) und einen in diesem drehbar angeordneten Drehkörper (3) mit einer Durchgangsöffnung (4) für ein Fluid, wobei entsprechend der Drehwinkelstellung des Drehkörpers (3) um eine Drehachse ein Strömungsweg abgesperrt oder zumindest teilweise freigegeben ist, wobei der Drehkörper (3) mit einer Spindel (2) verbunden ist, durch welche der Drehkörper (3) drehbar ist, wobei das Gehäuse (5) mit einer Abdeckung (6) versehen ist, wobei die Spindel (2) die Abdeckung (6) durchgreift, wobei die Spindel (2) durch eine Dichtungsvorrichtung (1, 1') dynamisch abgedichtet ist, wobei die Dichtungsvorrichtung (1, 1') einen ersten Druckring (12) und einen zweiten Druckring (13, 13') aufweist, wobei axial zwischen den Druckringen (12, 13, 13') mehrere Dichtungskomponenten aufgenommen sind und wobei die Dichtungsvorrichtung (1, 1') Bewegungen der Spindel (2) relativ zum Gehäuse (5) und zur Abdeckung (6) folgt,
**dadurch gekennzeichnet, dass** die Dichtungsvorrichtung (1, 1') einen ersten Antiextrusionsring (7), der eher weniger als Führungsring fungiert, und einen von diesem axial beabstandeten zweiten Antiextrusionsring (8), der eher mehr als Führungsring fungiert, aufweist, wobei die beiden Antiextrusionsringe (7, 8) die äußere Umfangsfläche der Spindel (2) innerhalb der Abdeckung (6) umfangen.

2. Ventil nach Anspruch 1, **dadurch gekennzeichnet, dass** die Dichtungsvorrichtung (1, 1') einen fixierten Dichtungsabschnitt (1a, 1'a) und einen dynamischen Dichtungsabschnitt (1b, 1'b) aufweist, wobei der dynamische Dichtungsabschnitt (1b, 1'b) die Umfangsfläche der Spindel (2) dichtend umfängt und relativ zum fixierten Dichtungsabschnitt (1a, 1'a) beweglich ist.

3. Ventil nach Anspruch 1 oder 2, **dadurch gekennzeichnet, dass** zwischen den Antiextrusionsringen (7, 8) mehrere im Querschnitt V-förmige, rechteckförmige und/ oder im Querschnitt anders gestaltete Ringe (9, 9') oder Schnüre angeordnet sind.

4. Ventil nach einem der voranstehenden Ansprüche, **dadurch gekennzeichnet, dass** zumindest auf einen Stopfbuchsring (10) eine Federeinrichtung (11) einwirkt und/ oder dass eine Federeinrichtung (11) an einem Stopfbuchsring (10) federnd anliegt, wobei sich die Federeinrichtung (11) mittelbar oder unmittelbar gegen die Abdeckung (6) und/ oder gegen einen Druckring (13) abstützt.

5. Ventil nach einem der voranstehenden Ansprüche, **dadurch gekennzeichnet, dass** die Dichtungsvorrichtung (1, 1') zur statischen Dichtung mindestens eine Membran (14) umfasst, welche zwischen der Abdeckung (6) und dem Gehäuse (5) angeordnet ist.

6. Ventil nach Anspruch 5, **dadurch gekennzeichnet, dass** die Membran (14) mit einem ersten Druckring (12) verbunden ist.

7. Ventil nach Anspruch 5 oder 6, **dadurch gekennzeichnet, dass** neben der ersten Membran (14) eine weitere Membran (15) aus einem Polymer oder Polytetrafluorethylen vorgesehen ist, welche an der ersten Membran (14) anliegt und zwischen der Abdeckung (6) und dem Gehäuse (5) angeordnet ist.

8. Ventil nach einem der Ansprüche 5 bis 7, **dadurch gekennzeichnet, dass** neben der ersten Membran (14) eine Körperdichtung (16) vorgesehen ist, welche an der ersten Membran (14) anliegt und zwischen der Abdeckung (6) und dem Gehäuse (5) angeordnet ist.

9. Ventil nach einem der voranstehenden Ansprüche, **dadurch gekennzeichnet, dass** die Dichtungsvorrichtung (1') Sicherheitsmittel zur Abdichtung des Ventils aufweist.

## Claims

1. A valve, comprising a housing (5) and a rotary body (3) arranged rotatably therein, with a passage opening (4) for a fluid, wherein a flow path is shut off or at least partially opened according to the rotational angular position of the rotary body (3) about a rotation axis, wherein the rotary body (3) is connected to a spindle (2) by means of which the rotary body (3) can be rotated, wherein the housing (5) is provided with a cover (6), wherein the spindle (2) extends through the cover (6), wherein the spindle (2) is dynamically sealed by a sealing device (1, 1'), wherein the sealing device (1, 1') has a first compression ring (12) and a second compression ring (13, 13'), wherein several sealing components are received axially between the compression rings (12, 13, 13'), and wherein the sealing device (1, 1') follows movements of the spindle (2) relative to the housing (5) and to the cover (6),
**characterized in that** the sealing device (1, 1') has a first anti-extrusion ring (7) which functions less as a guide ring, and a second anti-extrusion ring (8) which is axially spaced from the first and functions more as a guide ring, wherein the two anti-extrusion rings (7, 8) receive the outer circumferential face of the spindle (2) inside the cover (6).

2. The valve as claimed in claim 1, **characterized in that** the sealing device (1, 1') has a fixed sealing portion (1a, 1'a) and a dynamic sealing portion (1b, 1'b), wherein the dynamic sealing portion (1b, 1'b) receives in sealing fashion the circumferential face of the spindle (2) and is movable relative to the fixed sealing portion (1a, 1'a).

3. The valve as claimed in claim 1 or 2, **characterized in that** several rings (9, 9') or cords with V-shaped, rectangular and/or other shapes of cross-section are arranged between the anti-extrusion rings (7, 8).

4. The valve as claimed in any of the preceding claims, **characterized in that** a spring device (11) acts at least on a gland ring (10), and/or **in that** a spring device (11) lies in sprung fashion on a gland ring (10), wherein the spring device (11) rests directly or indirectly against the cover (6) and/or against a compression ring (13).

5. The valve as claimed in any of the preceding claims, **characterized in that** for static sealing, the sealing device (1, 1') comprises at least one membrane (14) which is arranged between the cover (6) and the housing (5).

6. The valve as claimed in claim 5, **characterized in that** the membrane (14) is connected to a first compression ring (12).

7. The valve as claimed in claim 5 or 6, **characterized in that** as well as the first membrane (14), a further membrane (15) made of a polymer or of polytetrafluoroethylene is provided which lies on the first membrane (14) and is arranged between the cover (6) and the housing (5).

8. The valve as claimed in any of claims 5 to 7, **characterized in that** as well as the first membrane (14), a body seal (16) is provided which lies on the first membrane (14) and is arranged between the cover (6) and the housing (5).

9. The valve as claimed in any of the preceding claims, **characterized in that** the sealing device (1') has security means for sealing the valve.

## Revendications

1. Soupape comprenant un boîtier (5) et un corps rotatif (3) disposé dans celui-ci de manière à pouvoir tourner avec une ouverture de passage (4) pour un fluide, une voie d'écoulement étant obturée ou dégagée au moins en partie en fonction de la position angulaire de rotation du corps rotatif (3) autour d'un axe de rotation, le corps de rotation (3) étant relié à une broche (2), par laquelle le corps rotatif (3) peut tourner, le boîtier (5) étant pourvu d'un recouvrement (6), la broche (2) traversant le recouvrement (6), la broche (2) étant étanchéifiée de manière dynamique par un dispositif d'étanchéité (1, 1'), le dispositif d'étanchéité (1, 1') comportant une première bague de pression (12) et une deuxième bague de pression (13, 13'), plusieurs composants d'étanchéité étant reçus axialement entre les bagues de pression (12, 13, 13') et le dispositif d'étanchéité (1, 1') suivant des mouvements de la broche (2) par rapport au boîtier (5) et au recouvrement (6), **caractérisée en ce que** le dispositif d'étanchéité (1, 1') comporte une première bague antiextrusion (7), qui fait moins office de bague de guidage, et une deuxième bague antiextrusion (8) espacée axialement de celle-ci, qui fait plutôt office de bague de guidage, les deux bagues antiextrusion (7, 8) entourant la surface périphérique extérieure de la broche (2) à l'intérieur du recouvrement (6).

2. Soupape selon la revendication 1, **caractérisée en ce que** le dispositif d'étanchéité (1, 1') comporte une section d'étanchéité fixée (1a, 1'a) et une section d'étanchéité dynamique (1b, 1'b), la section d'étanchéité dynamique (1b, 1'b) entourant de manière étanche la surface périphérique de la broche (2) et étant mobile par rapport à la section d'étanchéité (1a, 1'a) fixée.

3. Soupape selon la revendication 1 ou 2, **caractérisée en ce que** plusieurs bagues (9, 9') ou cordes en forme de V dans la section transversale, rectangulaires et/ou à configuration différente dans la section transversale sont disposées entre les bagues antiextrusion (7, 8).

4. Soupape selon l'une des revendications précédentes, **caractérisée en ce qu'**un système de ressort (11) agit au moins sur une bague de presse-étoupe (10) et/ou qu'un système de ressort (11) repose de manière élastique sur une bague de presse-étoupe (10), le système de ressort (11) prenant appui indirectement ou directement contre le recouvrement (6) et/ou contre une bague de pression (13).

5. Soupape selon l'une des revendications précédentes, **caractérisée en ce que** le dispositif d'étanchéité (1, 1') pour l'étanchéité statique comprend au moins une membrane (14), laquelle est disposée entre le recouvrement (6) et le boîtier (5).

6. Soupape selon la revendication 5, **caractérisée en ce que** la membrane (14) est reliée à une première bague de pression (12).

7. Soupape selon la revendication 5 ou 6, **caractérisée en ce qu'**est prévue, outre la première membrane (14), une autre membrane (15) en un polymère ou en polytétrafluoroéthylène, laquelle repose sur la première membrane (14) et est disposée entre le recouvrement (6) et le boîtier (5).

8. Soupape selon l'une des revendications 5 à 7, **caractérisée en ce qu'**est prévu, outre la première membrane (14), un joint d'étanchéité de corps (16), lequel repose sur la première membrane (14) et est disposé entre le recouvrement (6) et le boîtier (5).

9. Soupape selon l'une des revendications précédentes, **caractérisée en ce que** le dispositif d'étanchéité (1') comporte des moyens de sécurité pour étanchéifier la soupape.
